# EUROPÄISCHE PATENTSCHRIFT

(11) **EP 0 554 685 B1**
(45) Veröffentlichungstag und Bekanntmachung des Hinweises auf die Patenterteilung: **26.07.1995**
(21) Anmeldenummer: 93100514.4
(22) Anmeldetag: 15.01.1993
(51) Int. Cl.: B23B 31/10, B23B 31/16

(54) **Spannvorrichtung an der Planscheibe einer Drehmaschine zum Einspannen von Werkstückenden**
Clamping device on the faceplate of a lathe to clamp the ends of work-pieces
Dispositif de serrage du plateau d'un tour à serrer les extrémités de pièces à usiner

(30) Priorität: 27.01.1992 DE 4202134
(43) Veröffentlichungstag der Anmeldung: 11.08.1993
(73) Patentinhaber: Hoesch Maschinenfabrik Deutschland Aktiengesellschaft, 44145 Dortmund (DE)
(72) Erfinder: Bathelt, Kurt, W-4600 Dortmund 1 (DE); Sauerwald, Walter, Dipl.-Ing., W-4600 Dortmund 30 (DE); Schmidts, Klaus, W-4600 Dortmund 70 (DE)

(56) Entgegenhaltungen:
- EP-A- 0 141 651
- DE-B- 1 281 783
- DE-C- 545 944
- GB-A- 2 018 638
- GB-A- 2 068 791
- US-A- 1 713 797
- US-A- 2 822 180
- US-A- 2 883 201

## Beschreibung

Die Erfindung bezieht sich auf eine Spannvorrichtung an der Planscheibe einer Drehmaschine zum Einspannen von Werkstückenden gemäß dem Oberbegriff des Anspruchs 1.

Das DE-U-75 13 845 zeigt eine mechanische Spannvorrichtung für Werkstücke, insbesondere an Planscheiben von Großwerkzeugmaschinen.

Eine solche Spannvorrichtung besitzt einen ersten Drehantrieb zum Drehen der Spannspindel und einen zweiten Drehantrieb zum Verschieben der Spannspindel in Richtung ihrer Längsachse. Der erste Drehantrieb wird benutzt zur Anstellung der Spannklaue an das Werkstück, dagegen dient der zweite Drehantrieb der Erzeugung großer Spannkräfte. Die Erzeugung großer Spannkräfte mit geringem Drehmoment ist hier gewährleistet durch das zwischen dem Drehglied und der Spannspindel angeordnete Kniehebelsystem, das als Untersetzungstrieb wirkt. Selbstverständlich kann auch der erste Drehantrieb große Spannkräfte erzeugen, wenn entsprechend große Drehmomente in die mit der Spannspindel drehfest verbundene Drehhülse eingeleitet werden. Die Einleitung großer Drehmomente in die Drehhülse würde jedoch zu einem Antrieb großen Bauvolumens führen.

Ferner offenbaren die DE-C-151 693, die DE-C-3 991 und die DE-C-2 068 lediglich in Drehmaschinen einsetzbare Planscheiben, bei denen die Verschiebung der einzeln verschiebbaren Spannklauen nur von Hand mit großem Zeitaufwand möglich ist. Für diesen Stand der Technik sind auch die vorher gemachten Ausführungen zu dem ersten Drehantrieb gemäß DE-U-75 13 845 zutreffend.

Eine Planscheibe in Form eines Dreibackenfutters gemäß DE-U-77 35 088 kann keine Anregung für den Anmeldungsgegenstand liefern, da die drei Spindeln nicht einzeln antreibbar sind.

Dies gilt auch für eine durch die DE-Zeitschrift "Maschinenmarkt", 1990, Nr. 38, Seiten 50 und 51 bekanntgewordene Planscheibe mit einem zentralen Spannsystem, bei der vier Spannspindeln über ein zentrales Kegelradgetriebe stets gleichzeitig angetrieben werden.

Von daher liegt die Aufgabe zugrunde, eine Spannvorrichtung an der Planscheibe einer Drehmaschine der eingangs genannten Art so auszubilden, daß ein schnelles Ausrichten eines eingespannten Werkstückendes auf die Drehachse der Planscheibe ohne Planscheibenstillstand bei einem kleinen Bauvolumen ermöglicht wird.

Erfindungsgemäß wird diese Aufgabe durch die in Anspruch 1 angegebenen Merkmale gelöst.

Zweckmäßige und vorteilhafte Ausführungsformen des Erfindungsgegenstandes sind in den Ansprüchen 2 bis 5 angegeben.

Der Vorteil der erfindungsgemäßen Ausbildung einer Spannvorrichtung an der Planscheibe einer Drehmaschine sind insbesondere darin zu sehen, daß ein schnelles Ausrichten eines eingespannten Werkstückendes auf die Drehachse der Planscheibe ohne Planscheibenstillstand bei kleinen Bauvolumen des Antriebes der Spannvorrichtung gewährleistet ist.

Im folgenden wird ein Ausführungsbeispiel der Erfindung anhand einer Zeichnung, in der das Ausführungsbeispiel schematisch dargestellt ist, näher beschrieben.

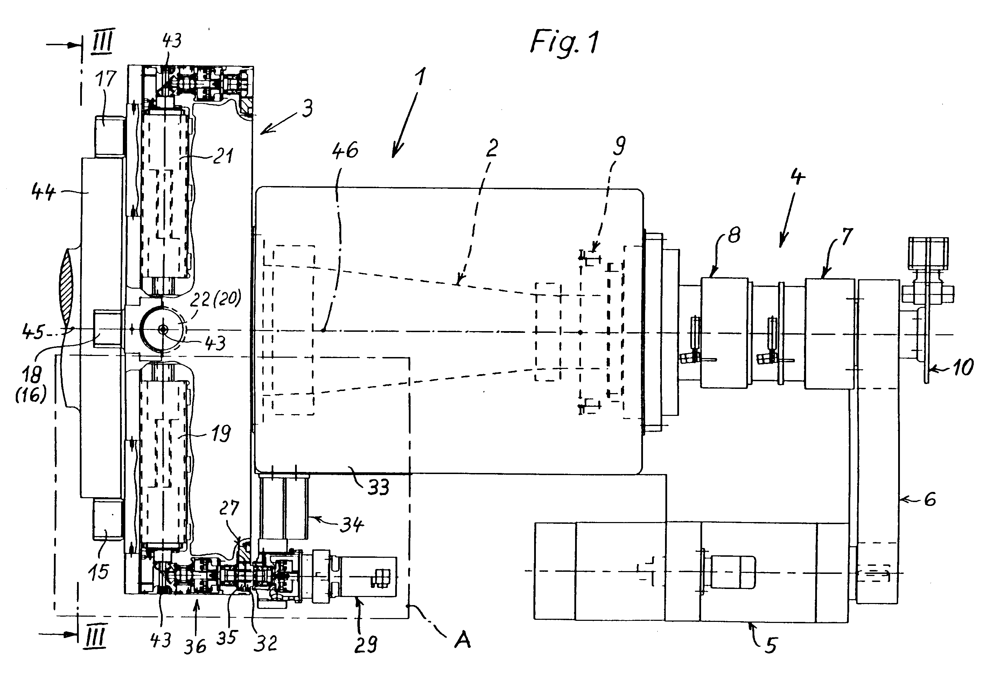

Es zeigt
- Fig. 1: einen Spindelstock einer Drehmaschine mit einer Planscheibe teilweise im Grundriß und teilweise im Schnitt sowie ein eingespanntes Werkstückende,

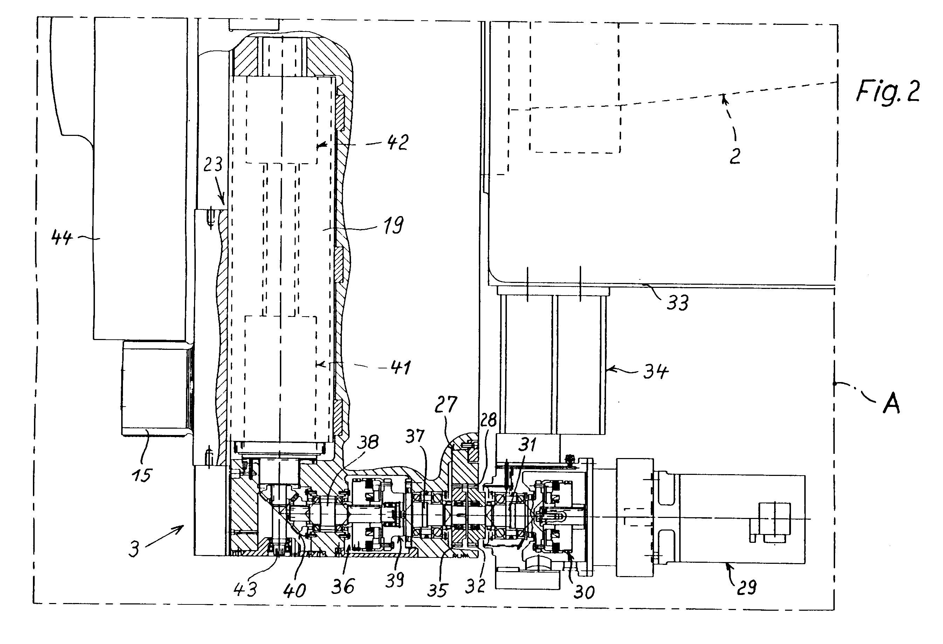

- Fig. 2: einen Teilausschnitt A der Fig. 1 in vergrößertem Maßstab,

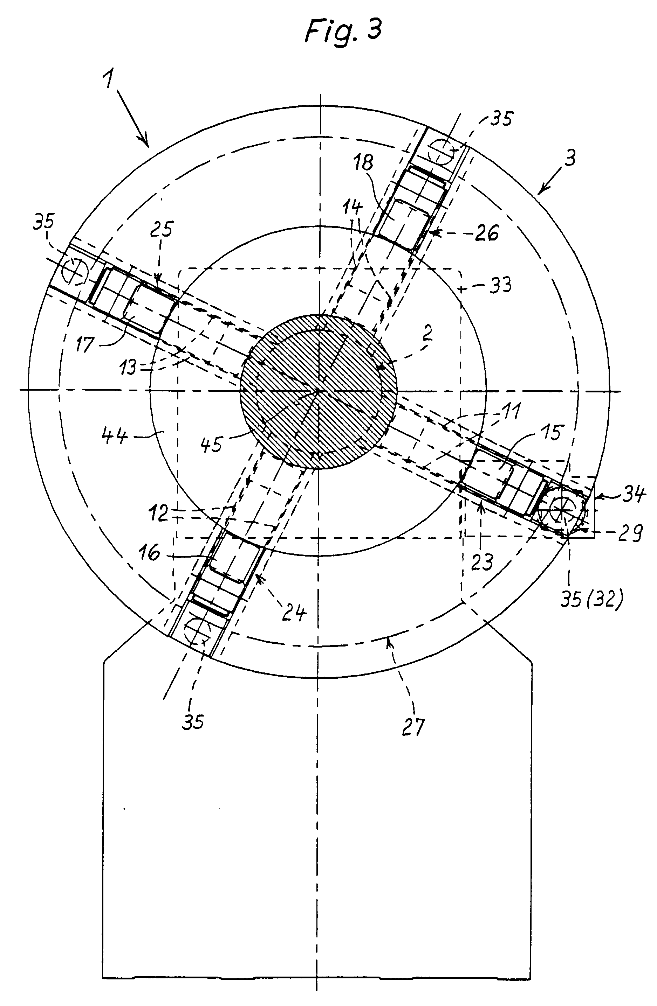

- Fig. 3: einen Schnitt entsprechend der Linie III-III in Fig. 1, jedoch mit einer anderen Stellung der Planscheibe.

Ein Spindelstock 1 einer Drehmaschine besitzt eine drehbar gelagerte Hauptspindel 2, auf der vorn eine Planscheibe 3 befestigt ist.

Die Drehbewegung der Hauptspindel 2 bzw. Planscheibe 3 erzeugt ein Hauptantrieb 4, der aus einem Motor 5, einem Riementrieb 6, zwei schaltbaren Planetengetrieben 7, 8, einer Kupplung 9 und einer Scheibenbremse 10 besteht.

Die Planscheibe 3 hat vier gleichmäßig versetzt angeordnete Führungen 11, 12, 13, 14 zum radialen Führen je einer Spannklaue 15, 16, 17, 18.

Jede Spannklaue 15 bis 18 bildet mit einer Spannspindel 19, 20, 21, 22 einen Gewindetrieb 23, 24, 25, 26.

Die Planscheibe 3 trägt einen konzentrisch und hydrostatisch gelagerten Zahnkranz 27, der mit einer Außenverzahnung 28 versehen ist.

Antreibbar ist der Zahnkranz 27 von einem stationär angeordneten Getriebemotor 29 über eine ein- und ausschaltbare Kupplung 30, eine Welle 31 und ein in die Außenverzahnung 28 eingreifendes Zahnrad 32.

Die stationäre Anordnung des Getriebemotors 29 wird dadurch erreicht, daß er an einer an das Spindelstockgehäuse 33 angeschraubten Konsole 34 befestigt ist.

Der Zahnkranz 27 ist mit jeder Spannspindel 19 bis 22 über je ein Zahnrad 35 und je ein an- und abkuppelbares Getriebe 36 verbunden.

Es handelt sich hier um vier gleiche Zahnräder 35 und vier gleiche Getriebe 36.

Jedes Getriebe 36 enthält Zwei Wellen 37, 38, eine Schaltkupplung 39, einen Kegelradtrieb 40 und zwei Planetentriebe 41, 42.

Bei eingeschalteter Kupplung 30 und bei allen vier angekuppelten Getrieben 36 bewirkt der Getriebemotor 29 eine gleichzeitige Verschiebung aller vier Spannklauen 15 bis 18, sofern die Drehzahl des Zahnkranzes 27 über oder unter der Drehzahl der Planscheibe 3 liegt.

Soll der Getriebemotor 29 die Verschiebung nur einer einzigen Spannklaue 15 oder 16 oder 17 oder 18 bewirken, so werden die drei Getriebe 36 für die nicht zu verschiebenden Spannklauen 16, 17, 18 oder 15, 17, 18 oder 15, 16, 18 oder 15, 16, 17 abgekuppelt.

Um auch eine Verschiebung der Spannklauen 15 bis 18 von Hand vornehmen zu können, sind alle vier Getriebe 36 mit je einem Antriebszapfen 43 ausgerüstet.

Das Einspannen eines Werkstückendes 44 erfolgt mittels der Spannklauen 15 bis 18 im Stillstand der Planscheibe 3.

Hierbei ist nicht auf Anhieb die Mitte 45 des Werkstückendes 44 mit der Drehachse 46 der Hauptspindel 2 bzw. Planscheibe 3 in übereinstimmung zu bringen, so daß ein Ausrichten des eingespannten Werkstückendes 44 erforderlich wird.

Das Ausrichten des eingespannten Werkstückendes 44 auf die Drehachse 46 der Hauptspindel 2 bzw. Planscheibe 3 geschieht bei umlaufender Planscheibe 3 in der Weise, daß die mit einer Meßuhr (nicht dargestellt) feststellbare Außermittigkeit des Werkstückendes 44 durch geringfügiges Verschieben zweier gegenüberliegender Spannklauen 15, 17 und/oder 16, 18 aufgehoben wird.

## Patentansprüche

1. Spannvorrichtung an der Planscheibe (3) einer Drehmaschine zum Einspannen von Werkstückenden, wobei die Planscheibe (3) mit mehreren in radialer Richtung eingelassenen Führungen (11, 12, 13, 14) versehen ist, denen je eine verschiebbare Spannklaue (15, 16, 17, 18) und eine antreibbare Spannspindel (19, 20, 21, 22) zugeordnet sind, wobei jede einzeln verschiebbare Spannklaue (15, 16, 17, 18) mit der zugehörigen Spannspindel (19, 20, 21, 22) einen Gewindetrieb bildet und wobei in jeder Spannspindel ein Untersetzungstrieb angeordnet ist, dadurch gekennzeichnet, daß die Planscheibe (3) einen konzentrisch gelagerten, von einem Getriebemotor (29) antreibbaren Zahnkranz (27) trägt, durch den jeder als Planetentrieb (41, 42) ausgebildete Untersetzungstrieb einer jeden Spannspindel (19, 20, 21, 22) über je ein Zahnrad (35), je eine erste Welle (37), je eine Schaltkupplung (39), je eine zweite Welle (38) und je einen Kegelradtrieb (40) antreibbar ist.

2. Spannvorrichtung nach Anspruch 1, dadurch gekennzeichnet, daß der Zahnkranz (27) hydrostatisch gelagert ist.

3. Spannvorrichtung nach Anspruch 1 oder 2, dadurch gekennzeichnet, daß der Zahnkranz (27) mit einer Außenverzahnung (28) versehen ist.

4. Spannvorrichtung nach einem der Ansprüche 1 bis 3, dadurch gekennzeichnet, daß der Getriebemotor (29) stationär angeordnet ist.

5. Spannvorrichtung nach einem der Ansprüche 1 bis 4, dadurch gekennzeichnet, daß der Getriebemotor (29) mit einer ein- und ausschaltbaren Kupplung (30) ausgeführt ist.

## Claims

1. Clamping device on the faceplate (3) of a lathe for gripping the ends of workpieces, in which the faceplate (3) has several guides (11, 12, 13, 14) let into it in the radial direction and which each have associated therewith a movable clamping claw (15, 16, 17, 18) and a drivable clamping spindle (19, 20, 21, 22), wherein each individually movable clamping claw (15, 16, 17, 18) together with the associated clamping spindle (19, 20, 21, 22) forms a threaded drive and wherein a reduction gear is arranged in each clamping spindle, characterised in that the faceplate (3) bears a gear ring (27) which is concentrically mounted and capable of being driven by a geared motor (29) and by means of which each reduction gear, which is constructed as a planetary gear (41, 42) of each clamping spindle (19, 20, 21, 22) can be driven in each case by way of a gear wheel (35), a first shaft (37), a clutch (39), a second shaft (38) and a bevel gear (40).

2. Clamping device according to claim 1 characterised in that the ring gear (27) is hydrostatically mounted.

3. Clamping device according to claim 1 or 2, characterised in that the ring gear (27) is provided with an external toothing (28).

4. Clamping device according to one of claims 1 to 3, characterised in that the geared motor (29) is arranged stationary.

5. Clamping device according to any one of claims 1 to 4, characterised in that the geared motor (29) is constructed with a clutch (30) which can be engaged and disengaged.

## Revendications

1. Dispositif de serrage sur le plateau (3) d'un tour, pour le serrage d'extrémités de pièces, dans lequel le plateau (3) est pourvu de plusieurs guides (11, 12, 13, 14), encastrés en position décalée dans le sens radial, à chacun desquels sont associés un mors de serrage (15, 16, 17, 18) mobile et une broche de serrage (19, 20, 21, 22) menée, chaque mors de serrage (15, 16, 17, 18) mobile individuel formant avec la broche (19, 20, 21, 22) de serrage associée un entraînement à vis, et un mécanisme réducteur étant disposé dans chaque broche de serrage, caractérisé en ce que le plateau (3) porte une couronne dentée (27) maintenue concentriquement et menée par un moteur d'entraînement (29), par l'intermédiaire de laquelle chaque mécanisme réducteur, réalisé sous la forme d'un entraînement planétaire (41, 42), de chaque broche de serrage (19, 20, 21, 22), peut être entraîné chaque fois par une roue dentée (35), un premier arbre (37), un embrayage (39), un second arbre (38) et un entraînement à pignon d'angle (40).

2. Dispositif de serrage selon la revendication 1, caractérisé en ce que la couronne dentée (27) est supportée de manière hydrostatique.

3. Dispositif de serrage selon la revendication 1 ou 2, caractérisé en ce que la couronne dentée (27) est dotée d'une denture extérieure (28).

4. Dispositif de serrage selon l'une des revendications 1 à 3, caractérisé en ce que le moteur d'entraînement (29) est installé en position stationnaire.

5. Dispositif de serrage selon l'une des revendications 1 à 4, caractérisé en ce que le moteur d'entraînement (29) est réalisé avec un accouplement (30) pouvant être embrayé et débrayé.
